# EUROPÄISCHE PATENTSCHRIFT

(11) **EP 1 954 438 B1**
(45) Veröffentlichungstag und Bekanntmachung des Hinweises auf die Patenterteilung: **14.04.2010**
(21) Anmeldenummer: 06828578.2
(22) Anmeldetag: 30.11.2006
(51) Int. Cl.: B23P 15/00, B25B 5/06, B23Q 3/08

(54) **VERFAHREN UND VORRICHTUNG ZUM FIXIEREN EINES BAUTEILS**
METHOD AND DEVICE FOR FIXING A COMPONENT
PROCEDE ET DISPOSITIF POUR FIXER UN ELEMENT

(30) Priorität: 03.12.2005 DE 102005057859
(43) Veröffentlichungstag der Anmeldung: 13.08.2008
(73) Patentinhaber: MTU Aero Engines GmbH, 80995 München (DE)
(72) Erfinder: MEIER, Reinhold, 84405 Dorfen (DE); SCHALLER, Ludwig, 85084 Reichertshofen (DE)
(86) Internationale Anmeldenummer: PCT/DE2006/002123
(87) Internationale Veröffentlichungsnummer: WO 2007/062636

(56) Entgegenhaltungen:
- EP-A- 1 574 280
- DE-A1- 10 206 447
- DE-A1- 19 547 952
- DE-A1- 19 831 736
- US-A- 4 989 909

## Beschreibung

Die Erfindung betrifft ein Verfahren zum Fixieren eines Bauteils gemäß dem Oberbegriff des Anspruchs 1. Des weiteren betrifft die Erfindung eine Vorrichtung zum Fixieren eines Bauteils gemäß dem Oberbegriff des Anspruchs 8, wie aus der Druckschrift DE 195 47 952 A1 bekannt ist.

Aus der DE 102 06 447 B4 sind ein Verfahren sowie eine Vorrichtung zum Fixieren eines Bauteils, nämlich zum Fixieren eines zu bearbeitenden Bauteils oder eines mit einem weiteren Bauteil zu verbindenden Bauteils, bekannt. Gemäß diesem Stand der Technik wird ein Bauteil mit einer Oberfläche und mindestens einer Bearbeitungs- oder Fügefläche bereitgestellt; weiterhin wird eine Kassette mit einer eine innere Oberfläche aufweisenden Aussparung zur Aufnahme des Bauteils bereitgestellt. Das bereitgestellte Bauteil wird in der bereitgestellten Kassette derart positioniert, dass die Oberfläche des Bauteils von der inneren Oberfläche der Kassette unter Bildung eines geschlossenen Volumens mit Abstand umgeben ist, und die Bearbeitungs- oder Fügefläche des Bauteils außerhalb des Volumens liegt. Zum Fixieren des Bauteils in der Kassette wird das Volumen mit einem schäumbaren Material befüllt, wobei anschließend das Material unter Bildung einer formstabilen Schaumstruktur aufgeschäumt wird. Hierdurch wird das Bauteil in der Kassette fixiert.

Eine weitere Vorrichtung zum Fixieren eines Bauteils ist aus der DE 198 31 736 C2 bekannt, wobei nach diesem Stand der Technik innerhalb einer Kassette ein Kunststoffblock positioniert ist, über welchen das Bauteil in der Kassette fixiert wird.

Hiervon ausgehend liegt der vorliegenden Erfindung das Problem zu Grunde, ein neuartiges Verfahren zum Fixieren eines Bauteils sowie eine entsprechende Vorrichtung zu schaffen.

Dieses Problem wird durch ein Verfahren zum Fixieren eines Bauteils im Sinne von Anspruch 1 gelöst.

Erfindungsgemäß werden innerhalb des Volumens angeordnete Fixierelemente mit einem Fluid gefüllt, um das Volumen durch die Fixierelemente auszufüllen und um so das Bauteil innerhalb der Kassette zu fixieren.

Im Sinne der hier vorliegenden Erfindung wird ein zu fixierendes Bauteil über mit einem Fluid befüllbare Fixierelemente in der Kassette fixiert.

Hierdurch ist ein sicheres und schonendes Fixieren des Bauteils innerhalb der Kassette möglich. Da sich die mit Fluid befüllbaren Fixierelemente an die Oberfläche des zu fixierenden Bauteils anpassen, können auch Bauteile mit komplexen Geometrien, die üblicherweise toleranzbehaftet sind, sicher und schonend fixiert werden, ohne dass die Gefahr von Beschädigungen des zu fixierenden Bauteils besteht.

Vorzugsweise sind die Fixierelemente schlauchartig und/oder kissenartig ausgebildet und werden mit einem gasförmigen oder flüssigen oder viskosem Fluid gefüllt, derart, dass ein Bauteil im Bereich von mindestens zwei sich gegenüberliegenden Abschnitten der Oberfläche desselben mit einem in etwa gleichgroßen Druck beaufschlagt wird.

Die erfindungsgemäße Vorrichtung zum Fixieren eines Bauteils ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung einer erfindungsgemäßen Vorrichtung zum Fixieren eines Bauteils nach einem ersten Ausführungsbeispiel der Erfindung; und
- Fig. 2: eine schematisierte Darstellung einer erfindungsgemäßen Vorrichtung zum Fixieren eines Bauteils nach einem zweiten Ausführungsbeispiel der Erfindung.

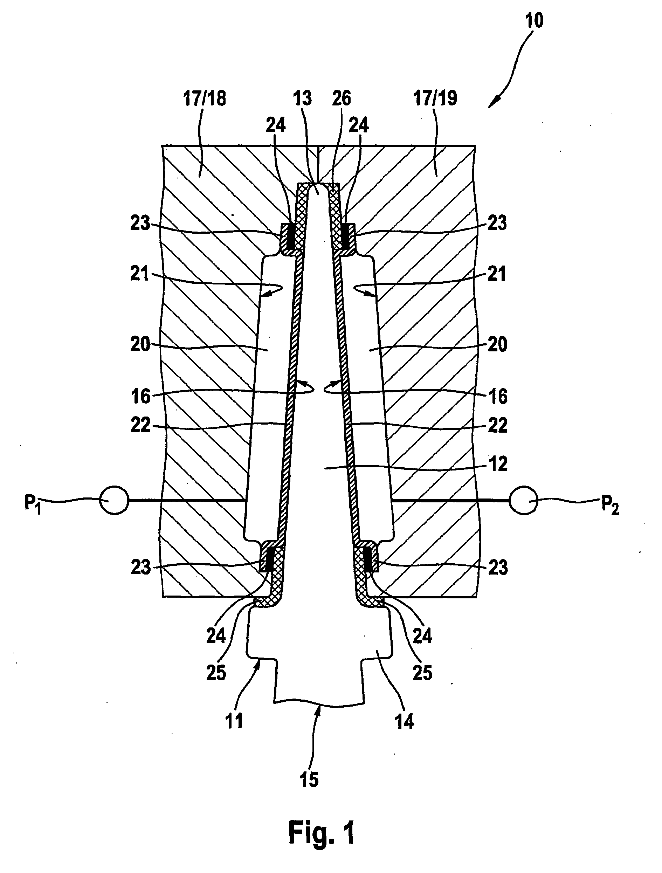

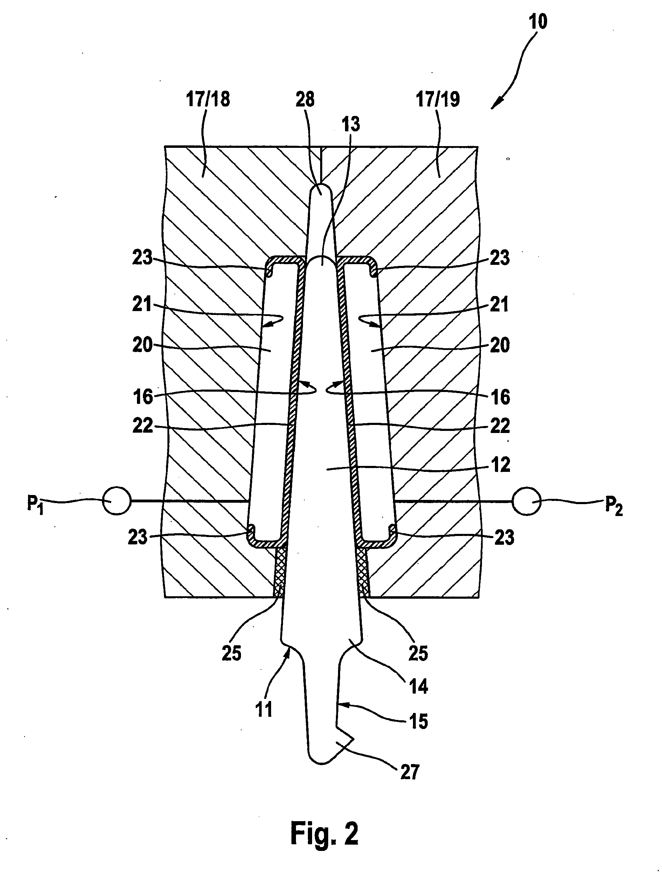

Nachfolgend wird die Erfindung unter Bezugnahme auf Fig. 1 und 2 in größerem Detail beschrieben.

Fig. 1 zeigt einen schematisierten Querschnitt durch eine erfindungsgemäße Vorrichtung 10 zusammen mit einem in der Vorrichtung 10 fixierten Bauteil 11, wobei es sich im gezeigten Ausführungsbeispiel der Fig. 1 bei dem Bauteil 11 um eine Gasturbinenschaufel handelt. Das als Gasturbinenschaufel ausgebildete Bauteil 11 verfügt über ein Schaufelblatt 12, welches sich zwischen einer Schaufelspitze 13 und einem Schaufelfuß 14 der Gasturbinenschaufel erstreckt, wobei im Bereich des Schaufelfußes 14 eine Fügefläche 15 bzw. Bearbeitungsfläche ausgebildet ist.

Über die Fügefläche 15 soll die Gasturbinenschaufel 11 der Fig. 1 an einen Vorsprung eines nicht-dargestellten Gasturbinenrotors gefügt werden.

Das als Gasturbinenschaufel ausgebildete Bauteil 11 ragt mit einer vom Schaufelblatt 12 definierten Oberfläche 16 in die erfindungsgemäße Vorrichtung 10 hinein, um so in der Vorrichtung 10 fixiert zu werden.

Die erfindungsgemäße Vorrichtung 10 umfasst im gezeigten Ausführungsbeispiel eine zweiteilige Kassette 17, wobei die beiden Hälften bzw. Teile 18 und 19 der Kassette 17 eine Aussparung 20 zur Aufnahme des Bauteils 11 bilden, und wobei das Bauteil 11 in der Kassette 17 derart positioniert werden kann, dass die Oberfläche 16 des Bauteils 11 von einer Innenfläche 21 der Kassette 17 bzw. der Aussparung 20 unter Bildung eines geschlossenen Volumens mit Abstand umgeben ist. Wie Fig. 1 entnommen werden kann, ragt das in der Kassette 17 positionierte Bauteil 11 mit der Fügefläche 15 bzw. der Bearbeitungsfläche aus der Kassette 11 heraus.

Im gezeigten Ausführungsbeispiel ist jeder Hälfte 18 bzw. 19 der Kassette 17 mindestens ein schlauchartiges oder kissenartiges Fixierelement 22 zugeordnet. Die Fixierelemente 22 sind aus einem elastischen Material, insbesondere aus einem gummiartigen Material, gefertigt und im Ausführungsbeispiel der Fig. 1 an Endabschnitten 23 über leistenartige Halteelemente 24 an der jeweiligen Hälfte 18 bzw. 19 der Kassette 17 fluiddicht befestigt. In einen zwischen der Innenfläche 21 der Kassette 17 und den Fixierelementen 22 ausgebildeten Hohlraum ist ein Fluid einbringbar, um so das gesamte Volumen zwischen der Oberfläche 16 des Bauteils 11 und der Innenfläche 21 der Kassette 17 auszufüllen und so letztendlich das Bauteil 11 innerhalb der Kassette 17 zu fixieren. Die Fixierelemente 22 werden vorzugsweise mit einem gasförmigen oder flüssigen oder viskosen Fluid gefüllt, und zwar derart, dass im gezeigten Ausführungsbeispiel an zwei *sich* gegenüberliegenden Seiten des Bauteils 11, nämlich an einer Saugseite sowie einer Druckseite des als Gasturbinenschaufel ausgebildeten Bauteils, ein in etwa gleich großer Druck P₁ bzw. P₂ herrscht.

An dieser Stelle sei darauf hingewiesen, dass im Bereich jeder der beiden Hälften 18 und 19 der Kassette 17 ein einziges Fixierelement positioniert sein kann, welches sich dann vorzugsweise über die gesamte axiale Erstreckung des zu fixierenden Bauteils, nämlich über die gesamte axiale Erstreckung des Schaufelblatts der zu fixierenden Gasturbinenschaufel, erstreckt. In diesem Fall handelt es sich bei den Fixierelementen um Fixierkissen, die am zu fixierenden Bauteil vollflächig anliegen.

Im Unterschied hierzu ist es auch möglich, dass in z. B. mäanderförmig verlaufende Nuten in den Hälften 18 und 19 der Kassette 17 jeweils mindestens ein schlauchartiges Fixierelement eingelegt ist, die beim Fixieren des Bauteils in gefülltem Zustand lediglich abschnittsweise an der Oberfläche 16 des zu fixierenden Bauteils 11 anliegen.

Wie Fig. 1 entnommen werden kann, wird das zu fixierende Bauteil 11, welches im gezeigten Ausführungsbeispiel als Gasturbinenschaufel ausgebildet ist, derart in der Kassette 17 positioniert, dass dasselbe sowohl im Bereich der Schaufelspitze 13 als auch im Bereich des Schaufelfußes 14 geführt bzw. zentriert ist. Hierdurch wird gewährleistet, dass sich beim Befüllen der Fixierelemente 22 mit Fluid und demnach beim Aufbauen der Drücke P₁ sowie P₂ in denselben das Bauteil 11 in seiner Lage bzw. Ausrichtung nicht verändert, und zwar auch dann, wenn beim Aufbauen der Drücke P₁ sowie P₂ dieselben voneinander abweichen.

Fig. 1 zeigt weiterhin, dass an Abschnitten der Oberfläche 16 des zu fixierenden Bauteils 11, an welchen beim Fixieren die mit Fluid befüllbaren Fixierelemente 22 nicht zur Anlage kommen, zwischen dem Bauteil 11 und der Kassette 17 Zwischenelemente 25 bzw. 26 angeordnet werden, die einen unmittelbaren Kontakt zwischen der Oberfläche 16 des zu fixierenden Bauteils 11 und der Innenfläche 21 der Kassette 17 verhindern. Hierdurch kann eine Beschädigung des zu fixierenden Bauteils 11 an diesen Oberflächenabschnitten vermieden werden.

Im Ausführungsbeispiel der Fig. 1 wird zum Fixieren des Bauteils 11 in der erfindungsgemäßen Vorrichtung 10 so vorgegangen, dass zuerst das als Gasturbinenschaufel ausgebildete Bauteil mit dem Schaufelblatt 12 von den Hälften 18 und 19 der Kassette 17 eingeschlossen wird, wobei dann das Schaufelblatt 12 in der von den Hälften 18 und 19 definierten Aussparung 20 positioniert ist. Anschließend werden die beiden Hälften 18 und 19 der Kassette 17 z. B. durch Verspannen oder Verschrauben fest miteinander verbunden, wobei dann dass Gasturbinenbauteil bereits im Bereich der O-berflächenabschnitte, an welchen die Zwischenelemente 25 bzw. 26 angreifen, formschlüssig sowie kraftschlüssig gehalten wird. Anschließend werden die Fixierelemente 22 mit einem Fluid befüllt, wodurch die Fixierelemente an der Oberfläche 16 des Bauteils 11 zur Anlage kommen und so letztendlich das Bauteil 11 in der Kassette 17 fixieren.

Die aus einem elastischen Material gebildeten Fixierelemente 22 schmiegen sich konturgenau an die Oberfläche 16 des Bauteils 11 an, wodurch selbst bei komplexen, toleranzbehafteten Geometrien ein sicheres Fixieren des Bauteils 11 in der Kassette 17 möglich ist, ohne dass die Gefahr einer Beschädigung des Bauteils besteht.

Ein zweites Ausführungsbeispiel einer erfindungsgemäßen Vorrichtung zum Fixieren eines Bauteils zeigt Fig. 2, wobei zur Vermeidung unnötiger Wiederholungen für gleiche Baugruppen gleiche Bezugsziffern verwendet werden, und wobei nachfolgend nur auf die Details eingegangen wird, durch die sich das Ausführungsbeispiel der Fig. 2 vom Ausführungsbeispiel der Fig. 1 unterscheidet.

Im Ausführungsbeispiel der Fig. 2 ragen die Endabschnitte 23 der mit Fluid befüllbaren Fixierelemente 22 in die von den Hälften 18 bzw. 19 der Kassette 17 definierte Aussparung 20 der Kassette 17 hinein. Die Gasturbinenschaufel 11 ragt mit einer Bearbeitungsfläche 15 aus der Kassette 17 heraus, wobei über einen an der Bearbeitungsfläche 15 ausgebildeten Dorn 27 die Ausrichtung der Gasturbinenschaufel 11 in der Kassette 17 bestimmt werden kann. Im Ausführungsbeispiel der Fig. 2 wird die zu fixierende Gasturbinenschaufel 11 derart in der Kassette 17 positioniert, dass dieselbe im Bereich des Schaufelfußes 14 geführt bzw. zentriert ist. Zur Fixierung im Bereich der Schaufelspitze 13 dient ein sich über die Schaufelspitze 13 hinaus erstreckendes Führungselement 28, ein sogenannter Pip. Nach dem Befüllen der Fixierelemente 22 mit Fluid liegen dieselben demnach auch im Bereich der Schaufelspitze 13 am Schaufelblatt 12 der Gasturbinenschaufel 11 an, sodass lediglich im Bereich des Schaufelfußes 14 das Zwischenelement 25 angeordnet wird.

In einer erfindungsgemäßen Vorrichtung können gleichzeitig mehrere Bauteile fixiert werden, um dieselben an Bearbeitungsflächen zu bearbeiten oder an Fügeflächen mit einem anderen Bauteil zu verbinden.

## Patentansprüche

1. Verfahren zum Fixieren eines als Gasturbinenschaufel gestalteten Bauteils, nämlich zum Fixieren einer zu bearbeitenden Gasturbinenschaufel oder einer mit einem weiteren Bauteil zu verbindenden Gasturbinenschaufel, wobei eine Gasturbinenschaufel (11) mit einer Oberfläche (16) und mindestens einer Bearbeitungs- oder Fügefläche (15) bereitgestellt wird, wobei eine Kassette (17) mit einer Aussparung (20) zur Aufnahme der Gasturbinenschaufel (11) bereitgestellt wird, und wobei die Gasturbinenschaufel in der Kassette in einer weise positioniert wird, dass die Oberfläche (16) des Bauteils von einer Innenfläche (21) der Aussparung der Kassette (17) unter Bildung eines geschlossenen Volumens mit Abstand umgeben ist und die Bearbeitungs- oder Fügefläche (15) der des Gasturbinenschaufel (11) außerhalb der Kassette (17) liegt,
**dadurch gekennzeichnet,**
**dass** innerhalb des Volumens angeordnete Fixierelemente (22) mit einem Fluid gefüllt werden, um das Volumen durch die Fixierelemente (22) auszufüllen und um so die Gasturbinenschaufel (11) innerhalb der Kassette (17) zu fixieren.

2. Verfahren nach Anspruch 1,
**dadurch gekennzeichnet,**
**dass** die Fixierelemente (22) mit einem gasförmigen oder flüssigen oder viskosen Fluid gefüllt werden.

3. Verfahren nach Anspruch 1 oder 2,
**dadurch gekennzeichnet,**
**dass** die Fixierelemente (22) schlauchartig und/oder kissenartig ausgebildet sind.

4. Verfahren nach einem oder mehreren der Ansprüche 1 bis 3,
**dadurch gekennzeichnet,**
**dass** zwischen dem Bauteil (11) und der Kassette (17) außerhalb des Bereichs der Fixierelemente (22) mindestens ein Zwischenelement (25, 26) positioniert wird, um zu verhindern, dass die Kassette (17) das Bauteil (11) unmittelbar berührt.

5. Verfahren nach einem oder mehreren der Ansprüche 1 bis 4,
**dadurch gekennzeichnet,**
**dass** eine zweiteilige oder mehrteilige Kassette (17) bereitgestellt wird, deren Hälften (18, 19) oder Teile nach dem Positionieren des Bauteils (11) in der Kassette miteinander verbunden werden.

6. Verfahren nach einem oder mehreren der Ansprüche 1 bis 5,
**dadurch gekennzeichnet,**
**dass** als Bauteil (11) eine Gasturbinenschaufel in der Kassette (17) positioniert wird, wobei die Gasturbinenschaufel einerseits im Bereich einer Schaufelspitze (13) und anderseits im Bereich einen Schaufelfußes (14) in der Kassette (17) geführt wird.

7. Verfahren nach Anspruch 6,
**dadurch gekennzeichnet,**
**dass** die Gasturbinenschaufel im Bereich einer Saugseite und einer Druckseite der Oberfläche derselben mit einem in etwa gleichgroßen Druck beaufschlagt wird.

8. Vorrichtung zum Fixieren eines als Gasturbinenschaufel gestalteten Bauteils, nämlich zum Fixieren einer zu bearbeitenden Gasturbinenschaufel oder einer mit einem weiteren Bauteil zu verbindenden Gasturbinenschaufel, mit einer die Gasturbinenschaufel zumindest teilweise umschließenden Kassette (17), wobei die Kassette eine Aussparung (20) mit einer Innenfläche (21) zur Aufnahme einer eine Oberfläche (16) und eine Bearbeitungs- oder Fügefläche (15) aufweisenden Gasturbinenschaufel (11) in einer Weise umfasst, dass die Oberfläche (16) der Gasturbinenschaufel (11) von der Innenfläche (21) der Ausnehmung (20) unter Bildung eines geschlossenen Volumens mit Abstand umgeben ist und die Bearbeitungs- oder Fügefläche (15) der Gasturbinenschaufel (11) außerhalb der Kassette (17) liegt, wobei die Kassette (17) zwei- oder mehrteilig ausgebildet ist und jede Hälfte (18, 19) oder jedes Teil der Kassette (17) mindestens ein Fixierelement (22) umfasst, über welches die Gasturbinenschaufel (11) an einem der Hälfte bzw. dem Teil gegenüberliegenden Abschnitt der Oberfläche (16) desselben fixierbar ist **dadurch gekennzeichnet,**
**dass** die Kassette (17) mehrere innerhalb des Volumens angeordnete, mit einem Fluid befüllbare Fixierelemente (22) umfasst, um das Volumen durch die Fixierelemente (22) auszufüllen und um so die Gasturbinenschaufel (11) innerhalb der Kassette (17) zu fixieren.

9. Vorrichtung nach Anspruch 8,
**dadurch gekennzeichnet,**
**dass** die Fixierelemente (22) von einem gasförmigen oder flüssigen oder viskosen Fluid befüllbar sind.

10. Vorrichtung nach Anspruch 8 oder 9,
**dadurch gekennzeichnet,**
**dass** die Fixierelemente (22) schlauchartig und/oder kissenartig ausgebildet sind.

11. Vorrichtung nach einem oder mehreren der Ansprüche 8 bis 10,
**dadurch gekennzeichnet,**
**dass** die Kassette (17) zweiteilig oder mehrteilig ausgebildet ist, wobei Hälften (18, 29) oder Teile derselben nach dem Positionieren des Bauteils (11) in der Kassette (17) miteinander verbindbar sind.

12. Vorrichtung nach einem oder mehreren der Ansprüche 8 bis 11,
**dadurch gekennzeichnet,**
**dass** die Fixierelemente (22) derart mit Fluid befüllbar sind, dass das zu fixierende Bauteil (11) im Bereich von mindestens zwei sich gegenüberliegenden Abschnitten der Oberfläche (16) desselben mit einem in etwa gleichgroßen Druck beaufschlagbar ist.

13. Vorrichtung nach einem oder mehreren der Ansprüche 8 bis 12,
**dadurch gekennzeichnet,**
**dass** die Kassette zur Fixierung einer Gasturbinenschaufel ausgebildet ist, wobei die Kassette (17) Führungsbereiche zur Führung der Gasturbinenschaufel im Bereich einer Schaufelspitze (13) und im Bereich einen Schaufelfußes (14) umfasst.

14. Vorrichtung nach einem oder mehreren der Ansprüche 8 bis 13, **gekennzeichnet durch**
zwischen dem Bauteil (11) und der Kassette (17) außerhalb des Bereichs der Fixierelemente (22) positionierbare Zwischenelemente (25, 26), über die verhindert werden kann, dass die Kassette (17) das Bauteil (11) unmittelbar berührt.

## Claims

1. A method for fixing a component which is configured as a gas-turbine blade, namely for fixing a gas-turbine blade that is to be processed or a gas-turbine blade that is to be connected to a further component, wherein a gas-turbine blade (11) is provided that has a surface (16) and at least one processing or joining face (15), wherein a cassette (17) is provided that has a recess (20) for receiving the gas-turbine blade (11), and wherein the gas-turbine blade is positioned in the cassette in such a way that the surface (16) of the component is surrounded by an inner face (21) of the recess of the cassette (17) with the formation of a closed volume with spacing, and the processing or joining face (15) of the gas-turbine blade (11) lies outside the cassette (17),
**characterised in that**
fixing elements (22) that are arranged within the volume are filled with a fluid in order to fill up the volume by means of the fixing elements (22) and in order thus to fix the gas-turbine blade (11) inside the cassette (17).

2. A method according to claim 1,
**characterised in that**
the fixing elements (22) are filled with a gaseous or liquid or viscous fluid.

3. A method according to claim 1 or 2,
**characterised in that**
the fixing elements (22) are formed in a hose-like and/or cushion-like manner.

4. A method according to one or more of claims 1 to 3,
**characterised in that**
at least one intermediate element (25, 26) is positioned between the component (11) and the cassette (17) outside the region of the fixing elements (22) in order to prevent the cassette (17) from directly touching the component (11).

5. A method according to one or more of claims 1 to 4,
**characterised in that**
a two-part or multi-part cassette (17) is provided, whose halves (18, 19) or portions are connected together after the component (11) has been positioned in the cassette.

6. A method according to one or more of claims 1 to 5,
**characterised in that**
a gas-turbine blade as the component (11) is positioned in the cassette (17), with the gas-turbine blade being guided in the cassette (17) on the one hand in the region of a blade tip (13) and on the other hand in the region of a blade foot (14).

7. A method according to claim 6,
**characterised in that**
a substantially equal pressure is applied to the gas-turbine blade in the region of a suction side and a pressure side of the surface of the same.

8. A device for fixing a component which is configured as a gas-turbine blade, namely for fixing a gas-turbine blade that is to be processed or a gas-turbine blade that is to be connected to a further component, having a
cassette (17) which encloses the gas-turbine blade at least in part, wherein the cassette comprises a recess (20) with an inner face (21) for receiving a gas-turbine blade (11), which has a surface (16) and a processing or joining face (15), in such a way that the surface (16) of the gas-turbine blade (11) is surrounded by the inner face (21) of the recess (20) with the formation of a closed volume with spacing, and the processing or joining face (15) of the gas-turbine blade (11) lies outside the cassette (17), wherein the cassette (17) is formed in two or more parts, and each half (18, 19) or each portion of the cassette (17) comprises at least one fixing element (22) by way of which the gas-turbine blade (11) can be fixed on a section of the surface (16) of the same lying opposite the half or the portion,
**characterised in that**
the cassette (17) comprises a plurality of fixing elements (22) that are arranged within the volume and can be filled with a fluid in order to fill up the volume by means of the fixing elements (22) and in order thus to fix the gas-turbine blade (11) inside the cassette (17).

9. A device according to claim 8,
**characterised in that**
the fixing elements (22) can be filled by a gaseous or liquid or viscous fluid.

10. A device according to claim 8 or 9,
**characterised in that**
the fixing elements (22) are formed in a hose-like and/or cushion-like manner.

11. A device according to one or more of claims 8 to 10,
**characterised in that**
the cassette (17) is formed in two or several parts, wherein halves (18, 29) or portions of the same can be connected together after the component (11) has been positioned in the cassette (17).

12. A device according to one or more of claims 8 to 11,
**characterised in that**
the fixing elements (22) can be filled with fluid in such a way that a substantially equal pressure can be applied to the component (11), which is to be fixed, in the region of at least two sections of the surface (16) of the same that lie opposite each other.

13. A device according to one or more of claims 8 to 12,
**characterised in that**
the cassette is formed in order to fix a gas-turbine blade, wherein the cassette (17) comprises guiding regions for guiding the gas-turbine blade in the region of a blade tip (13) and in the region of a blade foot (14).

14. A device according to one or more of claims 8 to 13,
**characterised by**
intermediate elements (25, 26) which can be positioned between the component (11) and the cassette (17) outside the region of the fixing elements (22) and by way of which it is possible to prevent the cassette (17) from directly touching the component (11).

## Revendications

1. Procédé servant à fixer un composant réalisé comme une aube de turbine à gaz, plus exactement servant à fixer une aube de turbine à gaz ou bien une aube de turbine à gaz à relier à un autre composant, une aube de turbine à gaz (11) étant mise à disposition avec une surface (16) et au moins une face d'usinage ou d'assemblage (15), une cassette (17) étant mise à disposition avec un évidement (20) servant à recevoir l'aube de turbine à gaz (11), et l'aube de turbine à gaz étant positionnée dans la cassette de telle manière que la surface (16) du composant est entourée à distance d'une face interne (21) de l'évidement de la cassette (17) en formant un volume fermé et que la face d'usinage ou d'assemblage (15) de l'aube de turbine à gaz (11) se trouve à l'extérieur de la cassette (17),
**caractérisé en ce que** des éléments de fixation (22) disposés à l'intérieur du volume sont remplis d'un fluide, afin de remplir le volume grâce aux éléments de fixation (22) et de fixer ainsi l'aube de turbine à gaz (11) à l'intérieur de la cassette (17).

2. Procédé selon la revendication 1, **caractérisé en ce que** les éléments de fixation (22) sont remplis d'un fluide sous forme gazeuse, fluide ou visqueuse.

3. Procédé selon la revendication 1 ou 2, **caractérisé en ce que** les éléments de fixation (22) sont réalisés sous forme de tube et/ou sous forme de rembourrage.

4. Procédé selon l'une quelconque ou plusieurs des revendications 1 à 3, **caractérisé en ce qu'**au moins un élément intermédiaire (25, 26) est positionné entre le composant (11) et la cassette (17) à l'extérieur de la zone des éléments de fixation (22) afin d'empêcher que la cassette (17) ne soit en contact direct avec le composant (11).

5. Procédé selon l'une quelconque ou plusieurs des revendications 1 à 4, **caractérisé en ce qu'**une cassette (17) en deux parties ou plus est mise à disposition, dont les moitiés (18, 19) ou les parties sont reliées entre elles dans la cassette après le positionnement du composant (11).

6. Procédé selon l'une quelconque ou plusieurs des revendications 1 à 5, **caractérisé en ce qu'**une aube de turbine à gaz est positionnée dans la cassette (17) en tant que composant (11), l'aube de turbine à gaz étant guidée dans la cassette (17) d'un côté dans la zone d'une pointe de l'aube (13) et d'un autre côté dans la zone d'un pied de l'aube (14).

7. Procédé selon la revendication 6, **caractérisé en ce que** l'aube de turbine à gaz est alimentée avec une pression à peu près identique dans la zone d'un côté aspiration et d'un côté pression de la surface de celle-ci.

8. Dispositif servant à fixer un composant réalisé comme une aube de turbine à gaz, plus exactement servant à fixer une aube de turbine à gaz à usiner ou une aube de turbine à gaz à relier à un autre composant, comportant une cassette (17) entourant au moins partiellement l'aube de turbine à gaz, la cassette comportant un évidement (20) présentant une face interne (21) servant à recevoir une aube de turbine à gaz (11) avec une surface (16) et une face d'usinage ou d'assemblage (15) de telle manière que la surface (16) de l'aube de turbine à gaz (11) soit entourée à distance par la face interne (21) de l'évidement (20) en formant un volume fermé et que la face d'usinage ou d'assemblage (15) de l'aube de turbine à gaz (11) se trouve à l'extérieur de la cassette (17), la cassette (17) étant réalisée en deux parties ou plus et chaque moitié (18, 19) ou chacune des parties de la cassette (17) comportant au moins un élément de fixation (22) par l'intermédiaire duquel l'aube de turbine à gaz (11) peut être fixée sur une section de la surface (16) de l'aube faisant face à la moitié et/ou à une partie, **caractérisé en ce que** la cassette (17) comporte plusieurs éléments de fixation (22) disposés à l'intérieur du volume, pouvant être remplis d'un fluide afin de remplir le volume grâce aux éléments de fixation (22) et ainsi de fixer l'aube de turbine à gaz (11) à l'intérieur de la cassette (17).

9. Dispositif selon la revendication 8, **caractérisé en ce que** les éléments de fixation (22) peuvent être remplis d'un fluide sous forme gazeuse, liquide ou visqueuse.

10. Dispositif selon la revendication 8 ou 9,
**caractérisé en ce que** les éléments de fixation (22) sont réalisés en forme de tube et/ou sous forme de rembourrage.

11. Dispositif selon l'une quelconque ou plusieurs des revendications 8 à 10, **caractérisé en ce que** la cassette (17) est réalisée en deux parties ou plus, des moitiés (18, 29) ou des parties de la cassette pouvant être reliées entre elles dans la cassette (17) après le positionnement du composant (11).

12. Dispositif selon l'une quelconque ou plusieurs des revendications 8 à 11, **caractérisé en ce que** les éléments de fixation (22) peuvent être remplis d'un fluide de telle manière que le composant (11) à fixer peut être alimenté avec une pression à peu près identique dans la zone d'au moins deux sections de la surface (16) du composant se faisant face.

13. Dispositif selon l'une quelconque ou plusieurs des revendications 8 à 12, **caractérisé en ce que** la cassette est réalisée pour la fixation d'une aube de turbine à gaz, la cassette (17) comportant des zones de guidage servant à guider l'aube de turbine à gaz dans la zone d'une pointe de l'aube (13) et dans la zone d'un pied de l'aube (14).

14. Dispositif selon l'une quelconque ou plusieurs des revendications 8 à 13, **caractérisé par** des éléments intermédiaires (25, 26) pouvant être positionnés entre le composant (11) et la cassette (17) à l'extérieur de la zone des éléments de fixation (22), lesquels éléments intermédiaires permettent d'empêcher que la cassette (17) ne soit en contact direct avec le composant (11).
